# EUROPEAN PATENT SPECIFICATION

(11) **EP 2 292 908 B1**
(45) Date of publication and mention of the grant of the patent: **20.04.2016**
(21) Application number: 10168797.8
(22) Date of filing: 07.07.2010
(51) Int. Cl.: F02C 6/12, F01D 5/04, F04D 29/16

(54) **Turbocharger with axial discontinuity**
Turbolader mit axialer Diskontinuität
Turbocompresseur dotée d'une discontinuité axiale

(30) Priority: 20.07.2009 US 505632
(43) Date of publication of application: 09.03.2011
(73) Proprietor: Honeywell International Inc., Morris Plains, NJ 07950 (US)
(72) Inventor: Espasa, Olivier, Morristown, NJ 07962-2245 (US); Tisserant, Denis, Morristown, NJ 07962-2245 (US); Severin, Emmanuel, Morristown, NJ 07962-2245 (US); Sausse, Lorrain, Morristown, NJ 07962-2245 (US); Abel, Francis, Morristown, NJ 07962-2245 (US); Barthelet, Pierre, Morristown, NJ 07962-2245 (US)
(74) Representative: Houghton, Mark Phillip

(56) References cited:
- EP-A2- 0 982 502
- DE-A1- 4 411 678
- DE-A1- 10 112 551
- DE-A1- 10 112 552
- DE-A1- 10 121 390
- DE-A1- 10 226 696
- DE-A1-102006 043 610
- FR-A1- 2 877 397

## Description

The present invention relates generally to turbocharger turbines and, more particularly, to surface features of stamped inserts used in turbocharger turbines.

### BACKGROUND OF THE INVENTION

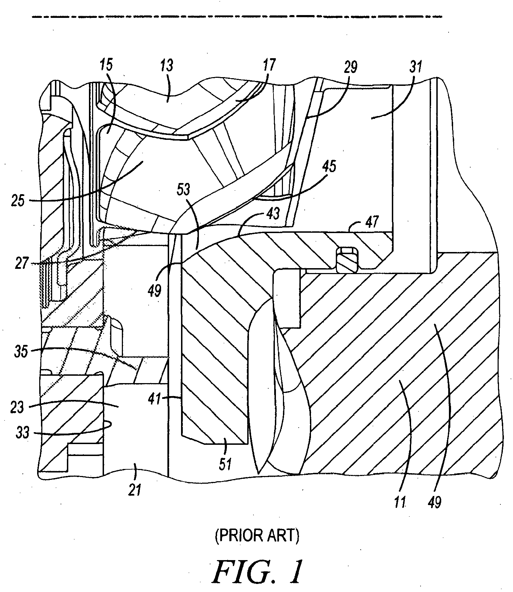

With reference to FIG. 1, a turbocharger turbine will generally include a housing 11, and a wheel 13 having a hub 15 and plurality of blades 17. The housing and wheel typically define a fluid passageway serially including a spiral volute portion 21, an inlet passageway 23 radially inward of the volute portion (and usually extending radially), a blade passageway 25 that extends from blade leading edges 27 to blade trailing edges 29, and an outlet passageway 31 that extends downstream from the blade trailing edges. Optionally, the inlet passageway may extend through static or variable vanes 35.

The fluid passageway is serially defined on an inner side by an inlet inner housing wall 33 (throughout the inlet) and by the wheel hub 15 (throughout the blade passageway). The fluid passageway is serially defined on an outer side by an inlet outer housing wall 41 (throughout the inlet), a shroud wall 43 (throughout the blade passageway) that conforms to outer edges 45 of the blades, and an outlet housing wall 47 downstream from the trailing edges.

The turbine housing will typically include a less precisely machined outer portion 49 and a cast insert 51 that forms the inlet outer housing wall 41, the shroud wall 43, and the outlet outer housing wall 47. The cast insert is machined with a sharp external corner 49 (i.e., having faces separated by greater than 180 degrees) at the shroud wall location adjoining the leading edge of the blades. This sharp external corner connects the radially extending inlet to a smoothly curving mixed-flow blade passageway that has a significant axial component of flow.

The sharp corner causes airflow along the outer inlet wall to separate from that wall and flow more centrally through the blade passageway. As a result, the blade passageway airflow through a small gap 53 that exists between the outer edges 45 of the blades and the shroud wall 43 is minimized. Without the sharp corner, significantly more air will pass through this gap, and a significant energy loss will ensue (along with a related loss in performance).

The cast insert can be an expensive device to create and machine to shape. It would be advantageous to have the housing comprise the less precisely machined outer portion, and a stamped and machined insert that forms the outer inlet wall and shroud wall. However, the stamping process is limited to forming wall bends with a radius of approximately the thickness of the material, which will not typically be as large as that of a cast insert. Thus, a thick stamped part would have gently sloping turns. Moreover, due to the limited thickness of stamped parts, the machining of the gently sloping corner of a stamped insert into the sharp external corner typically used adjoining the leading edge for cast turbine housings can prove problematic.

This is particularly true for cases of a turbine configured with a large trim, i.e., wherein the radial size of the exducer (at the blade trailing edges) is a large percentage of the size of the inducer (at the blade leading edges). In such cases, the machining of a sharp corner at the leading edge can require too large a reduction in the thickness of the shroud wall, leading to an insert that is not structurally strong enough for its likely loading over the life of the turbine.

Accordingly, there has existed a need for a stamped turbine housing wall that may be configured for high trim, that has significant structural strength, and that is configured to direct airflow away from the gap between the blade tips and the shroud wall. Preferred embodiments of the present invention satisfy these and other needs, and provide further related advantages.

German patent DE10112552 discloses a turbocharger device, which has a compressor housing connected with a turbine housing, with rotatable shaft in the housing and turbine wheel fixed at one end of shaft, and located in turbine housing exhaust gas passage, having a control valve to divert exhaust flow to either an inner or outer screw depending on engine speed to maintain turbine efficiency. DE 10 2006 043 610 A1 discloses a turbocharger device comprising an insert forming part of the inlet passage way of the turbocharger housing.

### SUMMARY OF THE INVENTION

The present invention provides a method as defined in claim 1. The method may include the features of any one or more of dependent claims 2 to 4.

The present invention also provides an insert as defined in claim 5. The insert may include the features of any one or more of dependent claims 6 to 8.

In various embodiments, the present invention solves some or all of the needs mentioned above, providing a stamped turbocharger turbine insert that can provide high efficiency in a cost effective part.

The invention provides a turbocharger turbine insert for use as part of a turbocharger turbine configured to operate over a range of flow conditions. The turbine includes a turbine housing that includes a body portion, and a turbine wheel within the housing. The wheel is characterized by an axis of rotation about which the wheel rotates, and it has a hub and a plurality of blades. Each blade forms a leading edge, a trailing edge, a hub edge and an outer edge opposite the hub edge, the hub edge and outer edge extending from the leading edge to the trailing edge. The path traveled by the outer edges of the blades through a rotation of the wheel defines an axially symmetric, smoothly varying, axially concave, outer-blade effective surface.

Together, the housing and wheel define a fluid passageway serially including a spiral volute portion, an inlet passageway radially inward of the volute portion, and a blade passageway that extends from the blade leading edges to the blade trailing edges, the blade passageway being defined on an inner side by the hub and on an outer side by a shroud wall of the housing. The inlet passageway is defined by an inner wall substantially aligned with the hub wall and by an outer wall that is integral with the shroud wall. A blade-gap zone is defined by and between the shroud wall and the outer-blade effective surface.

The insert is a separate part of the housing that is produced by a process including the steps of: stamping a sheet of metal to form an insert configured to be affixed within the housing to form all of, or at least a portion of the inlet passageway outer wall, and machining the insert to form an axial discontinuity in the inlet passageway outer wall. The axial discontinuity is characterized by a size and location that is selected to direct airflow through the blades and away from the blade-gap zone, over at least part, and preferably all, of the range of flow conditions. Advantageously, this feature of the invention reduces the acceleration and flow of air through the blade gap zone, allowing the blades to draw more energy from the exhaust stream as it converts from a high pressure to a low pressure state.

In another feature of the invention, the insert is configured such that the inlet passageway is larger upstream of the axial discontinuity. Alternatively, another feature of the invention may be that the insert is configured such that the inlet passageway is smaller upstream of the axial discontinuity. In yet another feature of the invention, the insert may be positioned immediately upstream of the leading edge.

Other features and advantages of the invention will become apparent from the following detailed description of the preferred embodiments, taken with the accompanying drawings, which illustrate, by way of example, the principles of the invention. The detailed description of particular preferred embodiments, as set out below to enable one to build and use an embodiment of the invention, are not intended to limit the enumerated claims, but rather, they are intended to serve as particular examples of the claimed invention.

### BRIEF DESCRIPTION OF THE DRAWINGS

FIG. 1 is a cross-section view of a prior art turbine.
FIG. 2 is a sketch of the basic elements of a first embodiment of a turbocharger, an intercooler and an engine embodying the present invention.
FIG. 3 is a cross-section view of a portion of a turbine, as used in the turbocharger of FIG. 2, including a stamped insert.
FIG. 4 is a cross-section view of the stamped insert depicted in FIG. 3, prior to being finally machined.
FIG. 5 is a cross-section view of the stamped insert depicted in FIG. 4, machined with an axial discontinuity in the form of the first embodiment of the invention.
FIG. 6 is a cross-section view of the stamped insert depicted in FIG. 4, machined with an axial discontinuity in the form of a second embodiment of the invention.
FIG. 7 is a sketch of the calculated gas acceleration levels through the turbine (using computational analysis) if the stamped insert is used without machining in an axial discontinuity.
FIG. 8 is a sketch of the calculated gas acceleration levels through the turbine (using computational analysis) if the stamped insert is machined with the axial discontinuity of the first embodiment.
FIG. 9 is a sketch of the calculated gas acceleration levels through the turbine (using computational analysis) if the stamped insert is machined with the axial discontinuity of the second embodiment.
FIG. 10 is a plot of estimated on-engine turbo overall efficiency using a stamped insert, with and without the first embodiment, as it varies over turbine expansion ratio (using engine data).
FIG. 11 is a cross-section view of a portion of a turbine in an alternative embodiment, including a cast insert.

### DETAILED DESCRIPTION OF THE PREFERRED EMBODIMENTS

The invention summarized above and defined by the enumerated claims may be better understood by referring to the following detailed description, which should be read with the accompanying drawings. This detailed description of particular preferred embodiments of the invention, set out below to enable one to build and use particular implementations of the invention, is not intended to limit the enumerated claims, but rather, it is intended to provide particular examples of them.

Typical embodiments of the present invention reside in a turbocharger turbine having a stamped insert that forms the inlet and shroud walls, wherein the inlet wall is machined to have an axial step that directs fluid flow away from an entrance to the gap that will typically exist between the blades and the shroud.

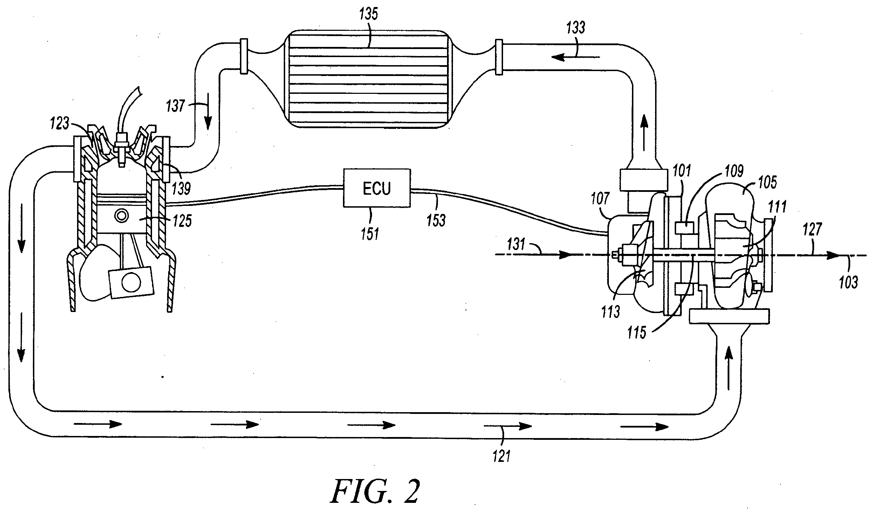

With reference to FIG. 2, in a first embodiment of the invention a turbocharger 101 includes a turbocharger housing and a rotor configured to rotate within the turbocharger housing along an axis of rotor rotation 103 on thrust bearings and two sets of journal bearings (one for each respective rotor wheel), or alternatively, other similarly supportive bearings. The turbocharger housing includes a turbine housing 105, a compressor housing 107, and a bearing housing 109 (i.e., a center housing that contains the bearings) that connects the turbine housing to the compressor housing. The rotor includes a turbine wheel 111 located substantially within the turbine housing, a compressor wheel 113 located substantially within the compressor housing and a shaft 115 extending along the axis of rotor rotation, through the bearing housing, to connect the turbine wheel to the compressor wheel.

The turbine housing 105 and turbine wheel 111 form a turbine configured to circumferentially receive a high-pressure and high-temperature exhaust gas stream 121 from an engine, e.g., from an exhaust manifold 123 of an internal combustion engine 125. The turbine wheel (and thus the rotor) is driven in rotation around the axis of rotor rotation 103 by the high-pressure and high-temperature exhaust gas stream, which becomes a lower-pressure and lower-temperature exhaust gas stream 127 and is axially released into an exhaust system (not shown).

The compressor housing 107 and compressor wheel 113 form a compressor stage. The compressor wheel, being driven in rotation by the exhaust-gas driven turbine wheel 111, is configured to compress axially received input air (e.g., ambient air 131, or already-pressurized air from a previous-stage in a multi-stage compressor) into a pressurized air stream 133 that is ejected circumferentially from the compressor. Due to the compression process, the pressurized air stream is characterized by an increased temperature, over that of the input air.

Optionally, the pressurized air stream may be channeled through a convectively cooled charge air cooler 135 configured to dissipate heat from the pressurized air stream, increasing its density. The resulting cooled and pressurized output air stream 137 is channeled into an intake manifold 139 on the internal combustion engine, or alternatively, into a subsequent-stage, in-series compressor. The operation of the system is controlled by an ECU 151 (engine control unit) that connects to the remainder of the system via communication connections 153.

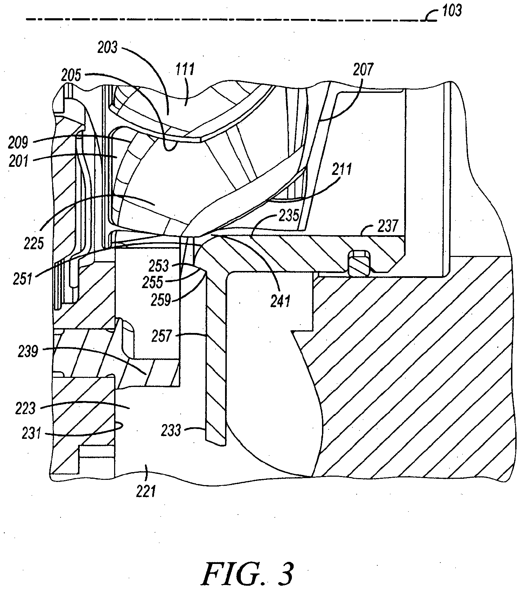

With reference to FIG. 3, the turbine is configured to operate over a range of flow conditions. The turbine wheel 111 has a hub 201 and a plurality of free-ended blades 203 (i.e., it is free-ended in that the blades do not carry a rotating shroud), and rotates symmetrically around the axis of rotor rotation 103. In that rotation, each blade forms a leading edge 205, a trailing edge 207, a hub edge 209 that connects to the hub, and an outer edge 211 opposite the hub edge. The hub edge and outer edge extend from the leading edge to the trailing edge. The path traveled by the outer edges of the blades through a rotation of the wheel around the axis of rotation 103 defines an axially symmetric, smoothly varying, axially concave, outer-blade effective surface.

The housing and wheel define a fluid passageway serially including a spiral volute portion 221, an inlet passageway 223 extending radially inward from the volute portion to the blade leading edges 205, a blade passageway 225 that extends from the blade leading edges to the blade trailing edges 207, and an outlet passageway extending past the blade passageway. The fluid passageway is serially defined on an inner side by an inlet inner housing wall 231 (throughout the inlet), and by the wheel hub 201 (throughout the blade passageway). The fluid passageway is serially defined on an outer side by an inlet outer housing wall 233 (throughout the inlet), a shroud wall 235 (throughout the blade passageway) that approximately conforms to the outer-blade effective surface formed by the outer edges 211 of the rotating blades, and an outlet housing wall 237 downstream from the trailing edges. Part of the blade passageway is a blade-gap zone 241, which is defined to be the annular gap between the shroud wall and the outer-blade effective surface. Optionally the inlet passageway may contain some type of nozzle such as a plurality of either fixed or variable vanes 239.

The housing includes a separate insert affixed within the housing. The insert is of a stamped metal configuration, and it integrally forms the inlet outer housing wall, the shroud wall and the outlet housing wall. In variations of the embodiment, the insert may form only a portion of inlet outer housing wall, and/or only a portion of the shroud wall. Thus, in broad concept, the insert forms a portion of inlet outer housing wall, and a portion of the shroud wall.

The insert is not formed with a sharp, machined, external corner directly connecting a radial inlet wall surface with a smoothly curving, substantially cylindrical shroud wall surface, as is typically found in fully cast turbine housings. Instead, the insert forms a machined axial discontinuity in the inlet outer passageway wall. The discontinuity is typically immediately upstream of the connection between the inlet passageway wall and the shroud wall. More to the point, the axial discontinuity is characterized by a size and location to direct airflow away from entering the blade-gap zone over at least portion (or more preferably all) of the range of flow conditions under which the turbine operates.

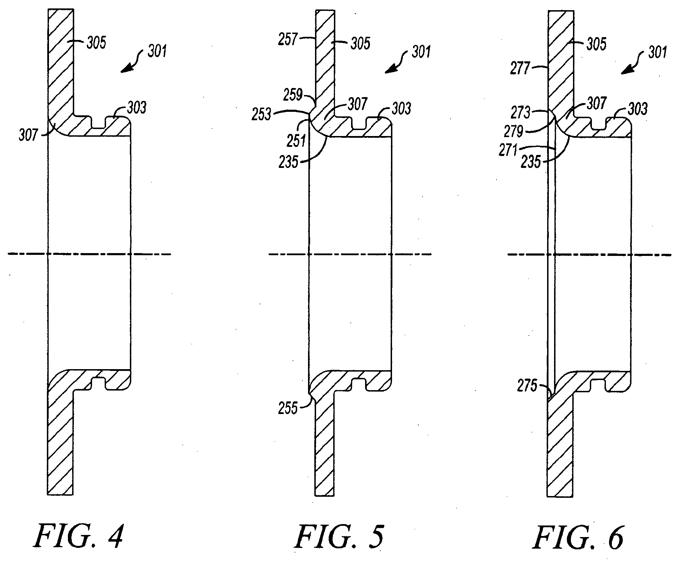

With reference to FIGS. 3 - 5, which include depictions of the insert before and after machining, in the first embodiment the inlet passageway is larger upstream of the axial discontinuity. More particularly, the shroud wall 235 curves smoothly and continuously into a short, downstream section 251 of the inlet outer housing wall 233, which might or might not curve up to extend in a radial direction. The short section 251 is machined with a sharp, external corner 253 to form an upstream-facing surface 255 that forms an axial discontinuity in that it narrows the inlet passageway from the standpoint of a fluid flowing through the inlet toward the blade passageway. At an upstream (i.e., outer) edge of the upstream-facing surface, the upstream-facing surface connects to a traditional radial wall 257 via an internal corner 259 that may be a sharp corner or a smoothly curving transition.

To form this series of surfaces, an insert 301 is first stamped in the shape of a ring-like structure having a hollow cylindrical portion 303 that forms the later part of the blade passageway and the outlet passageway, a round planar portion 305 that forms the inlet passageway, and a curving portion 307 smoothly connecting the first two portions. A location for the leading edge of the blade is then located, and immediately upstream of that, a point of minimum inlet thickness is selected. The planar portion and/or curving portions are then machined to remove a certain amount of material at all locations radially outward of the point of minimum inlet thickness. This machining removes material to form the sharp, external corner 253 at the point of minimum thickness, the upstream-facing surface 255, the radial wall 257, and the internal corner 259 that may be a sharp corner or a smoothly curving transition.

With reference to FIGS. 3, 4 and 6, in a second embodiment, the inlet passageway is smaller upstream of the axial discontinuity. More particularly, the shroud wall 235 is machined to curve smoothly and continuously through a short, machined downstream section 271 of the inlet outer wall, which might or might not curve up to extend in a radial direction. The machining removes material to form a relatively sharp external corner 273 between a downstream-facing surface 275 and a radial wall 277. The machining forms an axial discontinuity in that it broadens the inlet passageway from the standpoint of a fluid flowing radially from the inlet to the blade passageway. At an upstream (i.e., inner) edge of the downstream-facing surface, the downstream-facing surface connects to the downstream section 271 of the inlet outer wall via in internal corner 279, which may be a sharp corner or a smoothly curving transition.

As with the previous embodiment, to form this series of surfaces, an insert 301 is first stamped in the shape of a ring-like structure having a hollow cylindrical portion 303 that forms the later part of the blade passageway and the outlet passageway, a round planar portion 305 that forms the inlet passageway, and a curving portion 307 smoothly connecting the first two portions. A location for the leading edge of the blade is then located, and immediately upstream of that, a point of maximum inlet thickness is selected. The insert is then machined to remove a certain amount of material at locations radially inward (i.e., downstream) of the point of maximum thickness. This machining leaves the sharp, external corner 273 at the point of maximum thickness, the internal corner 279 immediately downstream from the point of maximum thickness, a flat, radial surface upstream from the point of maximum thickness, the upstream-facing surface, and smoothly curving wall (including the shroud wall) downstream from the internal corner and downstream-facing surface.

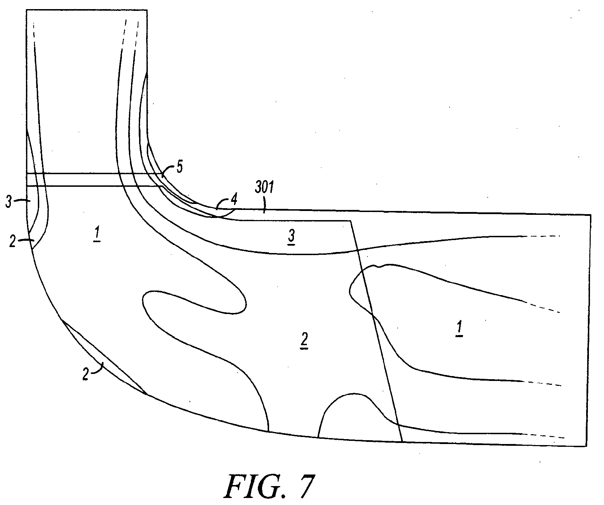

As was previously discussed, the machining of a traditional corner connecting the radial wall upstream of the blades with a curving wall downstream of the corner may not be structurally sound for most inserts in turbines with a large exducer to inducer ration (i.e., trim). With reference to FIG. 7, it has been analytically demonstrated that without such a corner, exhaust air will accelerate into the blade gap, reducing overall turbine efficiency. As shown in the figure, which uses increasing reference numbers (1-5) to identify zones of increasing fluid acceleration, the smooth transition along the outer housing wall allows exhaust to accelerate into the blade-gap zone 301, particularly at the upstream entrance to the blade-gap zone, and thereby lose efficiency.

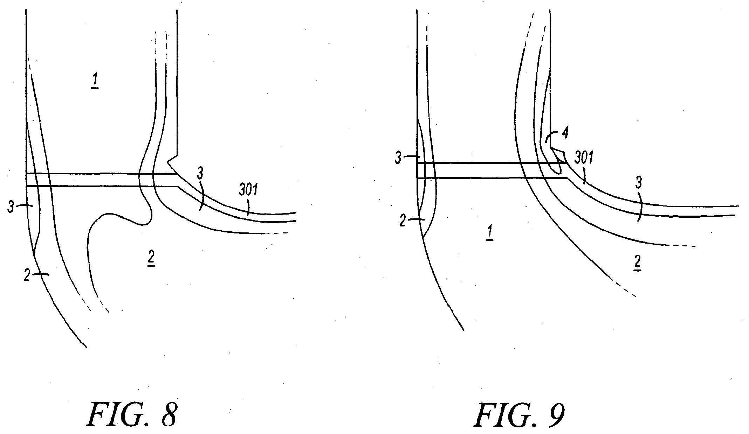

With reference to FIGS. 8 & 9, it can be seen that both the first embodiment (depicted in FIG. 8) and the second embodiment (depicted in FIG. 9) reduce this fluid acceleration through the blade-gap zone 301, and thus the resulting loss of efficiency. More particularly, the second embodiment has no zone 5 acceleration levels, and the first embodiment has no zone 5 or zone 4 acceleration levels.

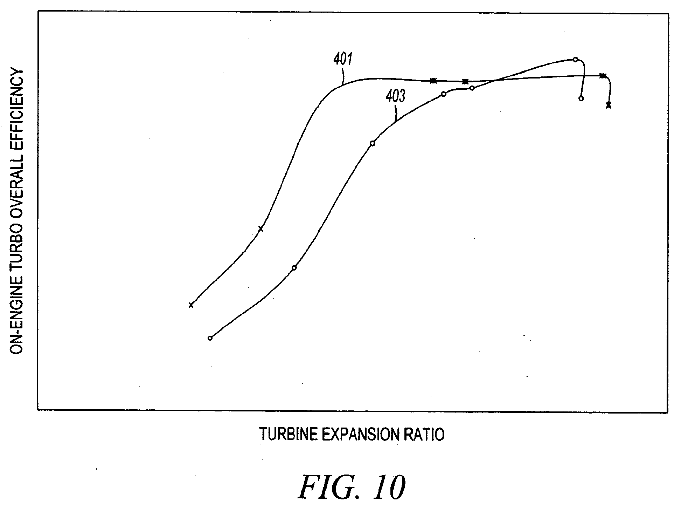

With reference to FIG. 10, it can be analytically seen that these reduced acceleration levels (for the first embodiment) produce significantly improved efficiency over a substantial portion of the range of flow conditions under which the turbine operates. More particularly, the submerged vane line 401 (which represents the first embodiment), shows a higher operating efficiency than the baseline stamped insert without an axial discontinuity 403 (or machined corner) over much of the range of flow conditions.

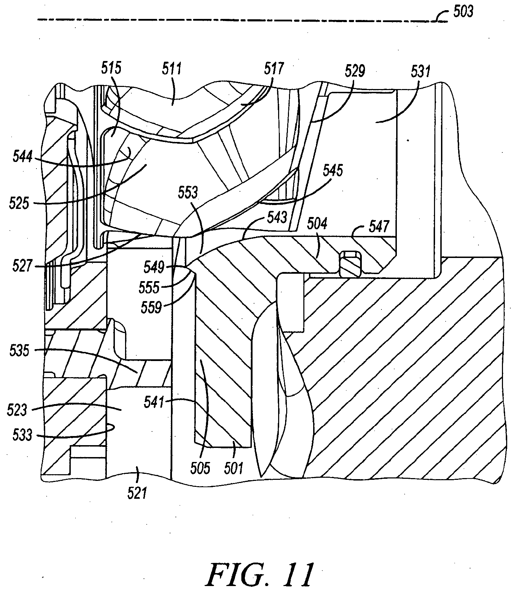

With reference to FIG. 11, while an important use of the axial discontinuity is in the production of stamped inserts, it should be understood that the invention is further embodied in a turbine having a cast insert, or even without an insert, which is configured to operate over a range of flow conditions. In particular, the turbine wheel 511 has a hub 515 and a plurality of free-ended blades 517, and rotates symmetrically around the axis of rotor rotation 503. In that rotation, each blade forms a leading edge 527, a trailing edge 529, a hub edge 544 that connects to the hub, and an outer edge 545 opposite the hub edge. The hub edge and outer edge extend from the leading edge to the trailing edge. The path traveled by the outer edges of the blades through a rotation of the wheel around the axis of rotation 503 defines an axially symmetric, smoothly varying, axially concave, outer-blade effective surface.

The housing and wheel define a fluid passageway serially including a spiral volute portion 521, an inlet passageway 523 extending radially inward from the volute portion to the blade leading edges 527, a blade passageway 525 that extends from the blade leading edges to the blade trailing edges 529, and an outlet passageway 531 extending past the blade passageway. The fluid passageway is serially defined on an inner side by an inlet inner housing wall 533 (throughout the inlet), and by the wheel hub 515 (throughout the blade passageway). The fluid passageway is serially defined on an outer side by an inlet outer housing wall 541 (throughout the inlet), a shroud wall 543 (throughout the blade passageway) that approximately conforms to the outer-blade effective surface formed by the outer edges 545 of the rotating blades, and an outlet housing wall 547 downstream from the trailing edges. Part of the blade passageway is a blade-gap zone 553, which is defined to be the annular gap between the shroud wall and the outer-blade effective surface. Optionally the inlet passageway may contain some type of nozzle such as a plurality of either fixed or variable vanes 535.

The housing may include a separate, cast and machined insert affixed within the housing, or the housing may be a unitary piece that includes the shape features described hereinafter for the insert. The insert is of a cast metal configuration, and it integrally forms the inlet outer housing wall, the shroud wall and the outlet housing wall. In variations of the embodiment, the insert may form only a portion of inlet outer housing wall, and/or only a portion of the shroud wall. Thus, in broad concept, the insert forms a portion of inlet outer housing wall, and a portion of the shroud wall.

The insert is not formed with a sharp, machined, external corner directly connecting a radial inlet wall surface with a smoothly curving, substantially cylindrical shroud wall surface, as is typically found in fully cast turbine housings. Instead, the insert forms a machined axial discontinuity in the inlet outer passageway wall. The discontinuity is typically immediately upstream of the connection between the inlet passageway wall and the shroud wall. More to the point, the axial discontinuity is characterized by a size and location to direct airflow away from entering the blade-gap zone over at least portion (or more preferably all) of the range of flow conditions under which the turbine operates.

In this embodiment the inlet passageway is larger upstream of the axial discontinuity. More particularly, the shroud wall 543 curves smoothly and continuously into a short, downstream section of the inlet outer housing wall 541, which might or might not curve up to extend in a radial direction. The short section is machined with a sharp, external corner 549 to form an upstream-facing surface 555 that forms an axial discontinuity in that it narrows the inlet passageway from the standpoint of a fluid flowing through the inlet toward the blade passageway. At an upstream (i.e., outer) edge of the upstream-facing surface, the upstream-facing surface connects to a traditional radial wall via an internal corner 559 that may be a sharp corner or a smoothly curving transition.

To form this series of surfaces, an insert 501 is first cast in the shape of a ring-like structure having a hollow cylindrical portion 504 that forms the later part of the blade passageway and the outlet passageway, a round planar portion 505 that forms the inlet passageway, and a curving portion smoothly connecting the first two portions. A location for the leading edge of the blade is then located, and immediately upstream of that, a point of minimum inlet thickness is selected. The planar portion and/or curving portions are then machined to remove a certain amount of material at all locations radially outward of the point of minimum thickness. This machining removes material to form the sharp, external corner 549 at the point of minimum inlet thickness, the upstream-facing surface 555, the radial wall, and the internal corner 559 that may be a sharp corner or a smoothly curving transition. The round planar portion 505 is originally cast to be thick enough such that the subsequent machining will leave the insert with a large enough thickness to withstand the structural and thermal loadings to which the insert will be subject.

It is to be understood that the invention comprises apparatus and methods for designing and producing the inserts, as well as for the turbines and turbochargers themselves. Additionally, the various embodiments of the invention can incorporate various combinations of the features described above. In short, the above disclosed features can be combined in a wide variety of configurations within the anticipated scope of the invention.

While particular forms of the invention have been illustrated and described, it will be apparent that various modifications can be made without departing from the scope of the invention. Thus, although the invention has been described in
detail with reference only to the preferred embodiments, those having ordinary skill in the art will appreciate that various modifications can be made without departing from the scope of the invention. Accordingly, the invention is not intended to be limited by the above discussion, and is defined with reference to the following claims.

## Claims

1. A method of making a turbocharger turbine insert for use as part of a turbocharger turbine configured to operate over a range of flow conditions, the turbine including a turbine housing including a body portion, and a turbine wheel within the housing, the wheel having an axis of rotation about which the wheel rotates, and the wheel having a plurality of blades, each blade forming a leading edge, a trailing edge and an outer edge, the outer edge extending from the leading edge to the trailing edge, wherein the path traveled by the outer edges of the blades through a rotation of the wheel defines an axially symmetric, axially concave, outer-blade effective surface, wherein the housing and wheel define a fluid passageway serially including an inlet passageway, and a blade passageway that extends from the blade leading edges to the blade trailing edges, the blade passageway being defined on an outer side by a shroud wall of the housing, wherein the inlet passageway is defined by an outer wall that is integral with the shroud wall, wherein a blade-gap zone is defined between the shroud wall and the outer-blade effective surface, and wherein the insert is a separate part of the housing, **characterized in that** it comprises the steps of:
stamping a sheet of metal to form an insert configured to be affixed within the body portion of the housing to form both the shroud wall and at least a portion of the in let passageway outer wall; and
machining the insert to form an axial discontinuity in the inlet passageway outer wall immediately upstream of the leading edge.

2. The method of claim 1, wherein the inlet passageway is larger immediately upstream of the axial discontinuity.

3. The method of claim 1, wherein the inlet passageway is smaller immediately upstream of the axial discontinuity.

4. The method of claim 1, wherein the axial discontinuity includes a short section machined with a sharp, external corner that forms an upstream-facing surface upstream of the sharp, external corner.

5. A turbocharger turbine insert for use as part of a turbocharger turbine to
operate over a range of flow conditions, the insert being **characterized in that** it is a stamped sheet metal insert configured to be affixed within a body portion of a turbine housing to form both a shroud wall of the housing and at least a portion of an inlet passageway outer wall; and **in that** it comprises an axial discontinuity in the inlet passageway outer wall immediately upstream of the leading edge.

6. An insert according to claim 5 wherein the inlet passageway is larger immediately upstream of the axial discontinuity.

7. An insert according to claim 5 wherein the inlet passageway is smaller immediately upstream of the axial discontinuity.

8. An insert according to any of claims 5 to 7 wherein the axial discontinuity includes a short section machined with a sharp, external corner that forms an upstream-facing surface upstream of the sharp, external corner.

## Patentansprüche

1. Verfahren zum Herstellen eines Turboladerturbineneinsatzes zur Verwendung als Teil einer Turboladerturbine, die für einen Betrieb über einen Bereich von Strömungsbedingungen konfiguriert ist, wobei die Turbine ein Turbinengehäuse mit einem Körperabschnitt und ein Turbinenrad innerhalb des Gehäuses beinhaltet, wobei das Rad eine Drehachse hat, um die sich das Rad dreht, und wobei das Rad mehrere Schaufeln hat, wobei jede Schaufel eine Vorderkante, eine Hinterkante und eine Außenkante bildet, wobei sich die Außenkante von der Vorderkante zur Hinterkante erstreckt, wobei der von den Außenkanten der Schaufeln durch eine Drehung des Rads zurückgelegte Weg eine axial symmetrische, axial konkave, wirksame Schaufelstirnfläche definiert, wobei das Gehäuse und das Rad einen Fluiddurchgang definieren, der aufeinanderfolgend einen Einlassdurchgang und einen Schaufeldurchgang beinhaltet, der sich von den Schaufelvorderkanten zu den Schaufelhinterkanten erstreckt, wobei der Schaufeldurchgang an einer Außenseite durch eine Mantelwand des Gehäuses definiert ist, wobei der Einlassdurchgang durch eine integral mit der Mantelwand ausgebildete Außenwand definiert ist, wobei eine Schaufelspaltzone zwischen der Mantelwand und der wirksamen Schaufelstirnfläche definiert ist, und wobei der Einsatz ein separates Teil des Gehäuses ist, **dadurch gekennzeichnet, dass** das Verfahren die folgenden Schritte umfasst:
Stanzen eines Blechs, um einen Einsatz zu bilden, der für eine Befestigung innerhalb des Körperabschnitts des Gehäuses konfiguriert ist, um sowohl die Mantelwand als auch mindestens einen Abschnitt der Einlassdurchgangsaußenwand zu bilden; und
maschinelles Bearbeiten des Einsatzes, um eine axiale Diskontinuität in der Einlassdurchgangsaußenwand unmittelbar stromaufwärts vor der Vorderkante zu bilden.

2. Verfahren nach Anspruch 1, bei dem der Einlassdurchgang unmittelbar stromaufwärts vor der axialen Diskontinuität größer ist.

3. Verfahren nach Anspruch 1, bei dem der Einlassdurchgang unmittelbar stromaufwärts vor der axialen Diskontinuität kleiner ist.

4. Verfahren nach Anspruch 1, bei dem die axiale Diskontinuität einen kurzen Bereich beinhaltet, der durch maschinelles Bearbeiten mit einer scharfen Außenecke ausgebildet ist und eine stromaufwärts zugewandte Oberfläche stromaufwärts vor der scharfen Außenecke bildet.

5. Turboladerturbineneinsatz zur Verwendung als Teil einer Turboladerturbine für einen Betrieb über einen Bereich von Strömungsbedingungen, wobei der Einsatz **dadurch gekennzeichnet ist, dass** es sich um einen gestanzten Blecheinsatz handelt, der für eine Anbringung innerhalb eines Körperabschnitts eines Turbinengehäuses konfiguriert ist, um sowohl eine Mantelwand des Gehäuses als auch mindestens einen Abschnitt einer Einlassdurchgangsaußenwand zu bilden, und dass er eine axiale Diskontinuität in der Einlassdurchgangsaußenwand unmittelbar stromaufwärts vor der Vorderkante umfasst.

6. Einsatz nach Anspruch 5, bei dem der Einlassdurchgang unmittelbar stromaufwärts vor der axialen Diskontinuität größer ist.

7. Einsatz nach Anspruch 5, bei dem der Einlassdurchgang unmittelbar stromaufwärts vor der axialen Diskontinuität kleiner ist.

8. Einsatz nach einem der Ansprüche 5 bis 7, bei dem die axiale Diskontinuität einen kurzen Bereich beinhaltet, der durch maschinelles Bearbeiten mit einer scharfen Außenecke ausgebildet ist, die eine stromaufwärts zugewandte Oberfläche stromaufwärts vor der scharfen Außenecke bildet.

## Revendications

1. Procédé de fabrication d'une pièce rapportée de turbine de turbocompresseur destinée à être utilisée en tant que partie d'une turbine de turbocompresseur configurée pour fonctionner sur une plage de conditions d'écoulement, la turbine comprenant un carter de turbine comprenant une partie corps, et une roue de turbine à l'intérieur du carter, la roue présentant un axe de rotation autour duquel tourne la roue, et la roue comportant une pluralité d'aubes, chaque aube formant un bord d'attaque, un bord de fuite et un bord extérieur, le bord extérieur s'étendant du bord d'attaque au bord de fuite, le trajet parcouru par les bords extérieurs des aubes lors d'une rotation de la roue définissant une surface effective d'aube extérieure, axialement symétrique et axialement concave, le carter et la roue définissant un passage de fluide comprenant à la suite un passage d'entrée et un passage d'aube qui s'étend des bords d'attaque des aubes aux bords de fuite des aubes, le passage d'aube étant défini sur un côté extérieur par une paroi d'enveloppe du carter, le passage d'entrée étant défini par une paroi extérieure qui fait partie intégrante de la paroi d'enveloppe, une zone d'intervalle d'aubes étant définie entre la paroi d'enveloppe et la surface effective d'aube extérieure, et la pièce rapportée étant une partie distincte du carter, **caractérisé en ce qu'**il comprend les étapes suivantes :
forgeage par pression d'une plaque de métal afin de former une pièce rapportée configurée pour être fixée à l'intérieur d'une partie corps du carter de façon à former à la fois la paroi d'enveloppe et au moins une partie de la paroi extérieure du passage d'entrée ; et
usiner la pièce rapportée afin de former une discontinuité axiale dans la paroi extérieure du passage d'entrée immédiatement en amont du bord d'attaque.

2. Procédé selon la revendication 1, dans lequel le passage d'entrée présente de plus grandes dimensions immédiatement en amont de la discontinuité axiale.

3. Procédé selon la revendication 1, dans lequel le passage d'entrée présente de plus petites dimensions immédiatement en amont de la discontinuité axiale.

4. Procédé selon la revendication 1, dans lequel la discontinuité axiale comprend une section courte usinée avec un coin extérieur aigu qui forme une surface orientée vers l'amont, en amont du coin extérieur aigu.

5. Pièce rapportée de turbine de turbocompresseur destinée à être utilisée en tant que partie d'une turbine de turbocompresseur pour un fonctionnement sur une plage de conditions d'écoulement, la pièce rapportée étant **caractérisée en ce qu'**il s'agit d'une pièce rapportée constituée d'une plaque de métal forgée par pression, configurée pour être fixée à l'intérieur d'une partie corps d'un carter de turbine de façon à former à la fois une paroi d'enveloppe du carter et au moins une partie d'une paroi extérieure de passage d'entrée ;
et **en ce qu'**elle présente une discontinuité axiale dans la paroi extérieure du passage d'entrée immédiatement en amont du bord d'attaque.

6. Pièce rapportée selon la revendication 5, dans laquelle le passage d'entrée présente de plus grandes dimensions immédiatement en amont de la discontinuité axiale.

7. Pièce rapportée selon la revendication 5, dans laquelle le passage d'entrée présente de plus petites dimensions immédiatement en amont de la discontinuité axiale.

8. Pièce rapportée selon l'une quelconque des revendications 5 à 7, dans laquelle la discontinuité axiale comprend une section courte usinée avec un coin extérieur aigu qui forme une surface orientée vers l'amont, en amont du coin extérieur aigu.
